# EUROPÄISCHE PATENTSCHRIFT

(11) **EP 3 892 870 B1**
(45) Veröffentlichungstag und Bekanntmachung des Hinweises auf die Patenterteilung: **11.01.2023**
(21) Anmeldenummer: 21171819.2
(22) Anmeldetag: 19.05.2018
(51) Int. Cl.: F16B 35/00, F16B 47/00

(54) **MONTAGESYSTEM**
MOUNTING SYSTEM
SYSTÈME DE MONTAGE

(30) Priorität: 19.05.2017 DE 102017005100
(43) Veröffentlichungstag der Anmeldung: 13.10.2021
(62) Teilanmeldung aus: 18740087.4
(73) Patentinhaber: Ronnenberg, Dieter, 73550 Waldstetten (DE); Ortwein, Ernst-Georg, 73061 Ebersbach (DE)
(72) Erfinder: Ronnenberg, Dieter, 73550 Waldstetten (DE); Ortwein, Moritz, 73061 Ebersbach (DE); Ortwein, Ernst-Georg, 73061 Ebersbach (DE)
(74) Vertreter: Nestler, Jan Hendrik

(56) Entgegenhaltungen:
- EP-A1- 2 947 333
- WO-A1-2009/156013
- WO-A1-2012/084476
- Ryan Yeargin ET AL: "Porosity Analysis in Porous Brass Using Dual Approaches", American Journal of Engineering and Applied Sciences, 2016, XP055509090, Gefunden im Internet: URL:http://thescipub.com/pdf/10.3844/ajeas sp.2016.91.97 [gefunden am 2018-09-24]

## Beschreibung

Die Erfindung betrifft ein Montagesystem nach dem Oberbegriff des Anspruchs 1.

Aus dem Markt und aus dem Dokument EP 1 440 246 B1 ist ein Montagesystem zum Anbringen von Gegenständen, wie Handtuchhaltern, Zahnputzbecherhaltern, Ablagen, Regalen, Leuchten und dergleichen an eine Wand mit Fliesen, Naturstein oder auch anderen glatten oder hochwertigen Oberflächen, wie beispielsweise in Bädern, bekannt.

Bei diesem Montagesystem aus dem Stand der Technik wird ein Grundkörper zunächst mittels eines Kleberinges an der Wand fixiert. Der Grundkörper bildet dort in Verbindung mit einem flüssigkeits- und gasdurchlässigen Element und der Wand zunächst einen Hohlraum. In diesen Hohlraum wird der Kleber eingespritzt. Durch das flüssigkeits- und gasdurchlässige Element (auch nur kurz Element genannt) kann der Kleber sowohl ausgasen oder auch für die Aushärte-Reaktion benötigte Feuchtigkeit oder Luft oder Luftfeuchtigkeit oder Dampf aufnehmen. Es muss nicht, aber es kann - je nach Kleber - ein Austausch in beide Richtungen sein.

Das Element wird im Stand der Technik aus einem kupferhaltigen Pulver oder Granulat gefertigt, indem es in eine Form gegeben und gepresst und/oder erhitzt wird. Da der Sprachgebrauch hier oft nicht ganz eindeutig ist, soll auch erwähnt werden, dass das Element auch gesintert sein kann. Dadurch entsteht eine ausreichend mechanisch stabile Scheibe, die dann aber trotzdem flüssigkeits- und gasdurchlässig ist.

Da der Kleber schließlich an der Wand und an dem Element haftet und dieses Element wiederum mit dem Grundkörper verbunden ist - beispielsweise mittels Niete - hält auch der Grundkörper an der Wand. An den Grundkörper können dann die verschiedensten Gegenstände (siehe oben) - beispielsweise über eine Adapterglocke - montiert werden. Das Vorteilhafte bei diesem System ist, dass hierzu keine Löcher gebohrt werden müssen. Dieses Bohren ist insofern sehr nachteilig, wenn die Wand mit Fliesen, Natursteinen oder anderen hochwertigen und/oder empfindlichen Oberflächen versehen ist und so die Wände nach dem Entfernen der Anbauteile (Gegenstände) hässliche Löcher aufweisen würden. Beim Stand der Technik hingegen wird der Grundkörper durch eine Drehbewegung parallel zur Oberfläche der Wand mittels einer Wasserpumpenzange problemlos von der Wand abgelöst. Mögliche Klebereste werden mit einem Glas-Kochfeldschaber rückstandsfrei entfernt.

In der Vergangenheit hat sich jedoch gezeigt, dass der Halt des Montagesystems bzw. des Grundkörpers an der Wand noch nicht ganz zufriedenstellend ist, bzw. das Abbinden bzw. das Aushärten des Klebers eine undefinierte Zeit benötigt.

In der WO 2012/084476 A1 ist ein aus einem Grundkörper und aus einem gas- und flüssigkeitsundurchlässigen Material bestehender Befestiger beschrieben, welcher Mittel zur Aufnahme eines Gegenstands aufweist, und welcher mittels eines Klebstoffs auf einer Auflagefläche fixierbar ist. An der der Auflagefläche zugewandten Innenseite des Grundkörpers ist eine hydrophile Einlage aufgebracht, der dosiert Feuchtigkeit zugeführt ist und auf welche ein aerober Klebstoff aufbringbar ist. Dieser ist mit der hydrophilen Einlage in einem von der Auflagefläche und dem Grundkörper umschlossenen Hohlraum gasdicht und flüssigkeitsdicht gekapselt.

Es ist Aufgabe der Erfindung, das flüssigkeits- und gasdurchlässige Element (auch nur Element genannt) selbst oder auch die Dimensionierungen des Klebespaltes oder auch den Klebeprozess zu optimieren.

Die Aufgabe wird durch die Merkmale von Anspruch 1 gelöst.

Die Erfinder haben festgestellt, dass die Gestaltung der Poren in dem Element - also indirekt der Zwischenräume zwischen den Staub- oder Granulat-Partikeln - von großer Wichtigkeit ist. Sind die Zwischenräume zu groß, so dringt Kleber in diese ein, sind die Zwischenräume zu eng, so kann der Gas- und Feuchtigkeitstransport nur noch sehr schleppend erfolgen und die Dauer des Abbinde-Prozesses ist nicht mehr akzeptabel. Werden die Elemente z.B. gesintert, so ist auch der Sinterprozess von sehr großem Einfluss. Aber auch bezüglich der Klebespaltgestaltung haben die Erfinder Dimensionierungen gefunden, die das Kleben verbessern. Weitere Lösungen ergeben sich dadurch, dass die Feuchtigkeit durch einen faserigen Feuchtigkeitsspender direkt in den Kleber hineingebracht wird.

Vorteilhafte weitere Ausgestaltungen ergeben sich aus den Unteransprüchen.

Nachfolgend soll nun die Erfindung anhand der Figuren näher erläutert werden. Es zeigen:
- Figur 1a: eine Draufsicht von einem Montagesystem mit Grundkörpers an der Wand;
- Figur 1b: einen Schnitt durch das Montagesystem gemäß Figur 1a;
- Figur 1c: einen Schnitt durch eine Adapterglocke für einen Grundkörper;

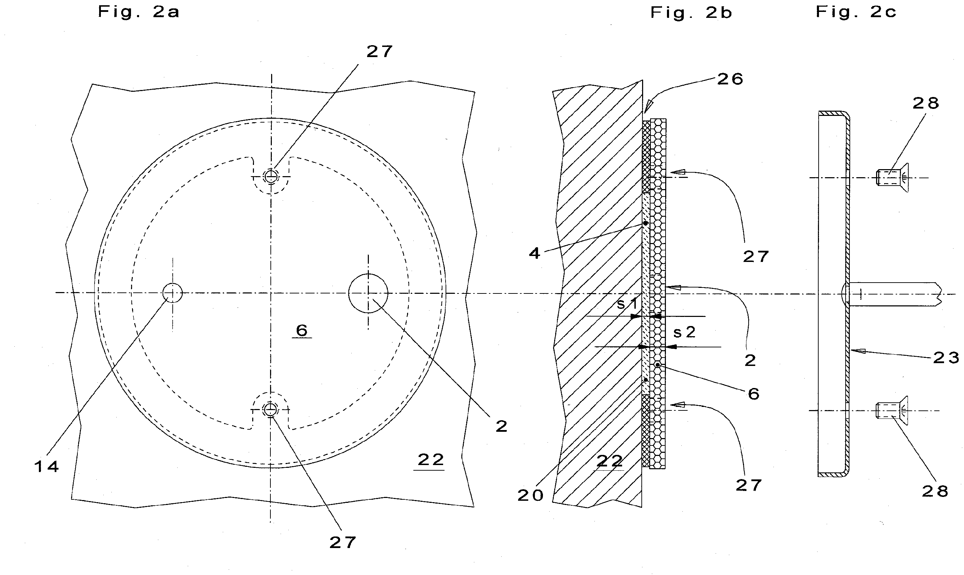

- Figur 2a: eine Draufsicht von einem Montagesystem ohne Grundkörper;
- Figur 2b: einen Schnitt durch das Montagesystem gemäß Figur 2a;
- Figur 2c: einen Schnitt durch eine Adapterglocke gemäß der Figuren 2a und 2b;
- Figur 3a: einen Schnitt durch eine Halterung für eine Testvorrichtung für flüssigkeits- und gasdurchlässige Elemente;
- Figur 3b: eine Draufsicht der Halterung;
- Figur 3c: eine Gesamtansicht der Testvorrichtung;
- Figur 4: ein Durchlässigkeitsdiagramm;
- Figur 5a: eine Draufsicht von einem Montagesystem mit einem integriertem faserigen Feuchtigkeitsspender;
- Figur 5b: einen Schnitt durch das Montagesystem gemäß Figur 5a;
- Figur 6a: eine Draufsicht von einem Montagesystem ohne Gehäuse;
- Figur 6b: einen Schnitt durch das Montagesystem gemäß Figur 6a;
- Figur 6c: eine Adapterglocke zu dem alternativen Adapterkonus aus Figur 6b.

Zunächst soll vorausgeschickt werden, dass Begriffe wie "links", "rechts", "oben" oder "unten" sich lediglich auf die Darstellung in den Figuren beziehen, aber von der tatsächlichen Anordnung in der Praxis abweichen können. Weiterhin soll darauf hingewiesen werden, dass die Figuren keine reinen technischen Zeichnungen sind, weshalb teilweise Schraffuren und Abbruchlinien fehlen. Auch können die relativen Dimensionen von der Wirklichkeit abweichen. In der Beschreibung nicht erwähnte Bezugszeichen ergeben sich aus der Bezugszeichenliste. Die Bezugszeichen haben in allen Figuren die gleiche Bedeutung.

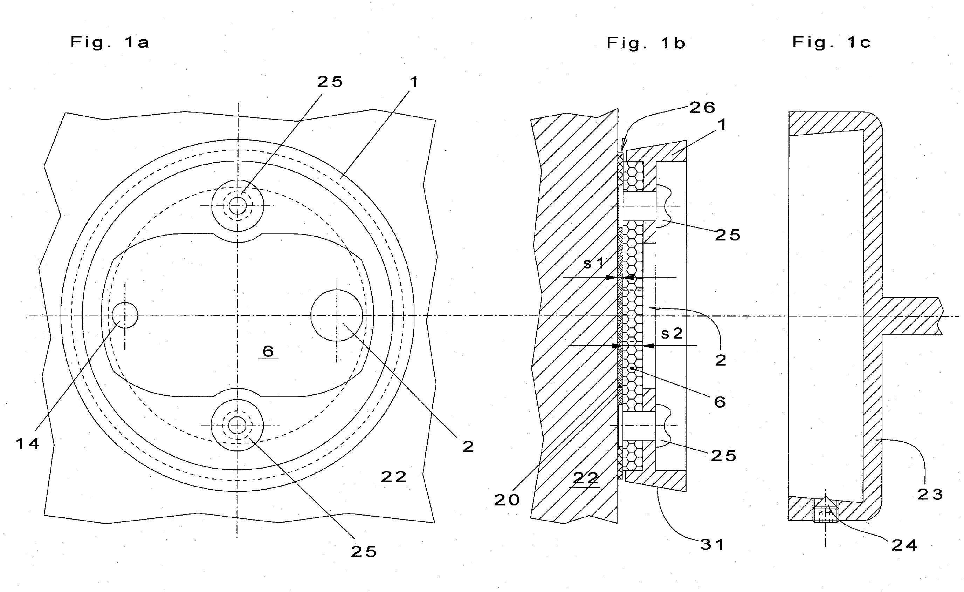

Die Erfindung wird am Besten in der Gesamtschau der Figuren 1a bis 1c verstanden. Diese Erfindung baut auf das bekannte System mit einem Grundkörper auf. In der Figur 1a ist die Draufsicht eines Grundkörpers 1 des erfindungsgemäßen Montagesystems an einer Wand 22 zu sehen. Ein flüssigkeits- und gasdurchlässiges Element 6 (auch nur kurz Element genannt) ist mittels Niete 25 mit dem Grundkörper verbunden. Die Montage des erfindungsgemäßen Montagesystems beginnt, indem von einem doppelseitig klebenden Fixierungsring 26 eine Schutzfolie an der zur Wand 22 gewandten Oberfläche abgezogen und der Grundkörper 1 an der gewünschten Stelle der Wand 22 angepresst wird. Danach wird über eine Einfüllöffnung 2 so lange ein Kleber 20 aus einer Tube in den Hohlraum zwischen Wand 22 und Element 6 gespritzt, bis er wieder aus einer Steigöffnung 14 austritt. Nach etwa 12 Stunden hat der Kleber 20 eine derartige Festigkeit, dass er belastet werden kann, d.h. dass eine Adapterglocke 23 über den Grundkörper 1 gestülpt werden kann. Mittels einer Madenschraube 24 wird die Adapterglocke 23 auf dem Grundkörper 1 gesichert. In der Figur 1c ist an der Adapterglocke 23 eine Abbruchlinie zu sehen, an der der Gegenstand - wie beispielsweise ein Handtuchhalter, ein Zahnputzbecherhalter, Ablage, Regale oder eine Leuchte - angeordnet ist. In einer anderen Ausgestaltung eines Montagesystems existiert kein Grundkörper, sondern das Element 6 wird mittels eines Fixierungsringes 26 direkt auf die Wand 22 geklebt. Der Fixierungsring 26 ist hier sogar mit Laschen ausgestattet, damit beim Einspritzen des Klebers 20 über die Einfüllöffnung 2 in den Hohlraum 4 kein Kleber 20 in die Gewindebohrungen 27 eindringt. Da dieses Montagesystem ohne Grundkörper 1 auskommt, fällt die Adapterglocke 23 dort zierlicher aus.

Alternativ zu zwei Gewindebohrungen 27, kann auch ein einzelner, mittiger Gewindestift in das Element 6 eingepresst sein. Die später zu verbauenden Gegenstände (bspw. Badezimmer-Accessoires) werden über dieses Gewinde verschraubt.

Durch vielfältige Versuche haben die Erfinder benutzte Elemente 6 analysiert, aufgeschnitten, Schliffbilder erstellt usw. Es wurden Korngrößen des Metallpulvers bzw. - granulates variiert und verschiedene Drücke und Temperaturen ausprobiert. Am Ende konnte ein Quotient des scheinbaren spezifischen Gewichts des Elementes (Gewicht des Elementes dividiert durch das Volumen der sichtbaren Körpergrenzen (Scheibe minus Bohrungen)) durch das spezifische Gewicht des Werkstoffes des Elementes ermittelt werden. Dieser Quotient beschreibt gewissermaßen die "Luftigkeit" des Elementes 6. Der vorteilhafte Maß-Bereich ist hierbei im Wesentlichen bei allen Werkstoffen gleich, egal ob es sich um reines Kupfer oder Bronze oder Messing oder um einen Kunststoff handelt. Die Aushärtezeit des Klebers 20 ist dann besonders optimal, wenn der Quotient des Elementes zwischen 0,6 und bis 0,7 liegt. Besonders vorteilhaft ist ein Quotient von 0,64 bis 0,68.

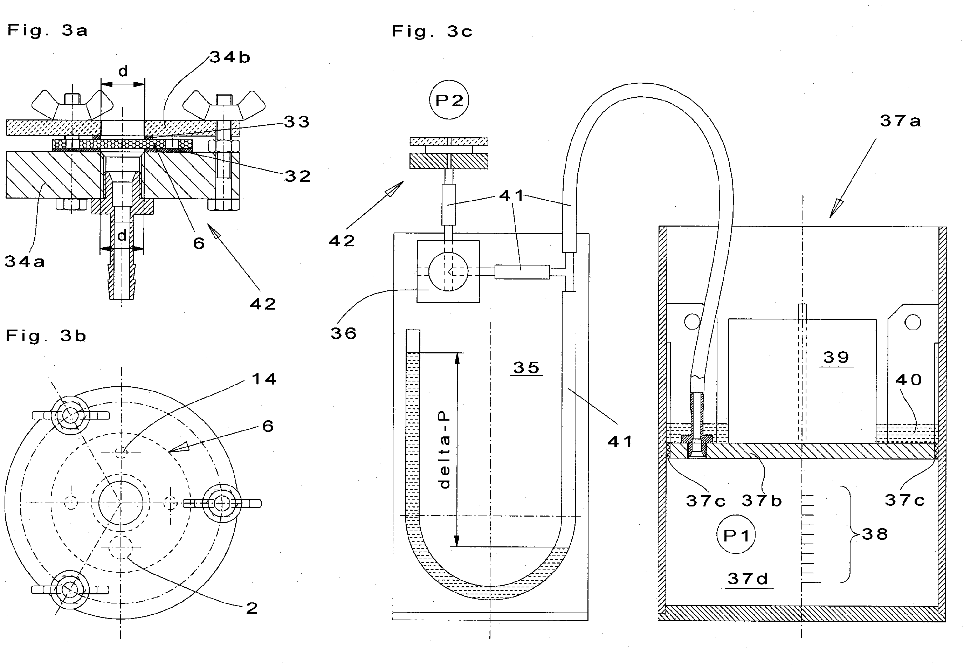

Diese "Luftigkeit" der Elemente 6 kann man auch messen, indem man das Element 6 mit Umgebungsluft durchbläst und dabei den Druckabfall zwischen vor und hinter dem Element 6 und die Zeit t misst. Mit den Figuren 3a bis 3c wird eine entsprechende Testvorrichtung gezeigt.

In einem transparenten Zylinder 37a ist ein Kolben 37b angeordnet. Der Kolben ist beispielsweise ringsum mit einer Filzdichtung 37c versehen und wird von oben her durch austauschbare, verschieden schwere Gewichte 39 belastet. Die Filzdichtung 37c hat - in Verbindung mit einer Wassersperrschicht 40 - den Vorteil, dass sie immer gleichmäßig feucht ist, nicht so stramm sein muss, und dass man mögliche Luft-Leckagen aus dem Druckraum 37d zum Umgebungsdruck P2 sofort sehen kann.

Der so erzeugte Druck kann analog in einfachster Weise am U-Rohr-Manometer 35 abgelesen werden. Wenn das Ventil 36 den Druck P1 zur Halterung 42 freigibt, so durchbläst diese Luft genau einen Quadratzentimeter eines Elementes 6 (Durchmesser d = 11,28 mm). Besonders vorteilhaft ist an dieser Vorrichtung auch, dass der große Gummiring 32 für eine gerade und sichere Auflage des Elementes 6 auf der Druckplatte 34a dient, während der kleine Gummiring 33 zwar auch gut abdichtet, aber zugleich auch noch - in Verbindung mit der oberen Druckplatte 34b - den Blick auf die Lage des Elementes 6 und seiner möglichen Einfüll- und Steigöffnungen 2, 14 zulässt. Diese Öffnungen sollten nicht zu sehr in der Nähe des Durchmesser d liegen, um nicht das Messergebnis zu verfälschen.

Zur Messung der Luftdurchlässigkeit eines Elementes 6 wird beispielsweise die Fallzeit des Kolbens 37b für einen Liter komprimierter Luft P1 über die an der Vorderseite des Zylinders angebrachte Skala 38 für 1 Liter Volumen gemessen. Gleichzeitig wird auch der Überdruck erfasst.

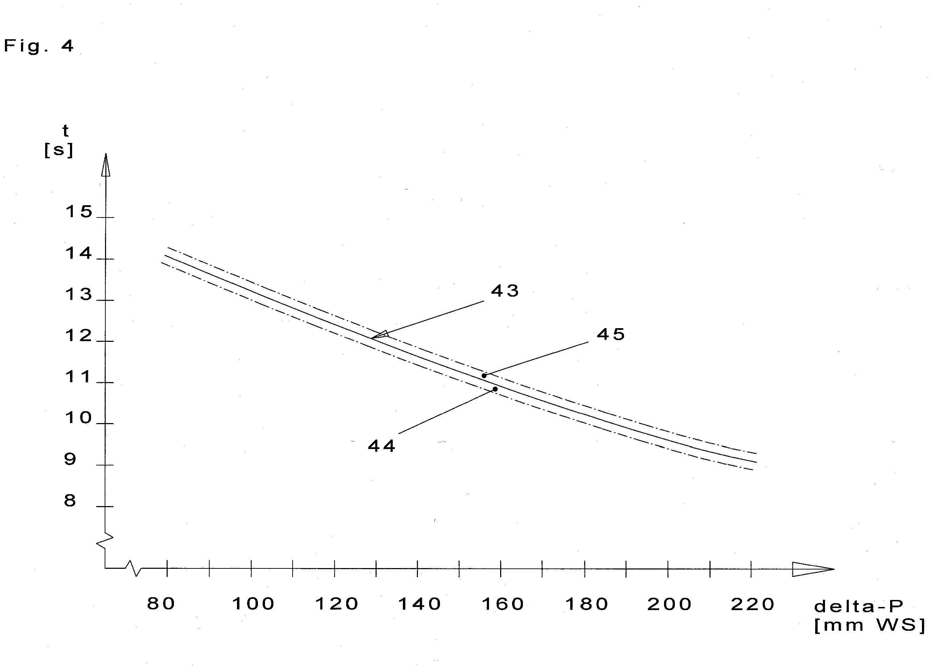

Da die Elemente 6 - je nach Bautyp - unterschiedliche Dicken s2 aufweisen können und bei einem dünneren Element sich die Fallzeit verkürzt und der Strömungswiderstand des Elementes proportional zur Dicke s2 ist, muss man für eine standardisierte Kurve (siehe Figur 4) die gemessenen Fallzeiten durch die Dicke s2 dividieren. Will man später wieder zu realen Idealwerten - auch beispielsweise für eine neue Dicke s2 eines neuen Bautyps - zurückrechnen, so braucht man für die nur die Fallzeiten mit der aktuellen Dicke s2 zu multiplizieren.

Die Figur 4 zeigt ein Diagramm vieler Messungen mit verschiedenen Drücken und daraus resultierenden Fallzeiten des Kolbens 37b bei 1 Liter komprimierter Luft P1 und einer senkrechten Durchströmungsfläche vom 1 cm², wobei die Fallzeiten auf einen Millimeter Dicke s2 des Elementes herunter gerechnet wurden.

Aber auch die Schichtdicke s1 des Klebers 20 beeinflusst die Klebeverbindung. Bei einer Dicke s1 von 0,3 bis 1,0 mm - vorzugsweise von 0,5 bis 0,8 mm - erfolgt eine stabile und zugleich auch schnell abbindende Klebeverbindung.

Aber auch die Dicke s2 des Elementes 6 hat einen Einfluss auf die Klebeverbindung. Bei einer Dicke s2 des Elementes 6 von 1,5 bis 6 mm - vorzugsweise 2 bis 3,5 mm - erfolgt eine stabile und zugleich auch schnell abbindende Klebeverbindung.

Auch wenn man die Dicken s1 und s2 ins Verhältnis setzt, mit s1 zu s2 = 1 zu 8 bis 1 zu 5 - vorzugsweise 1 zu 4 so erfolgt eine stabile und zugleich auch schnell abbindende Klebeverbindung.

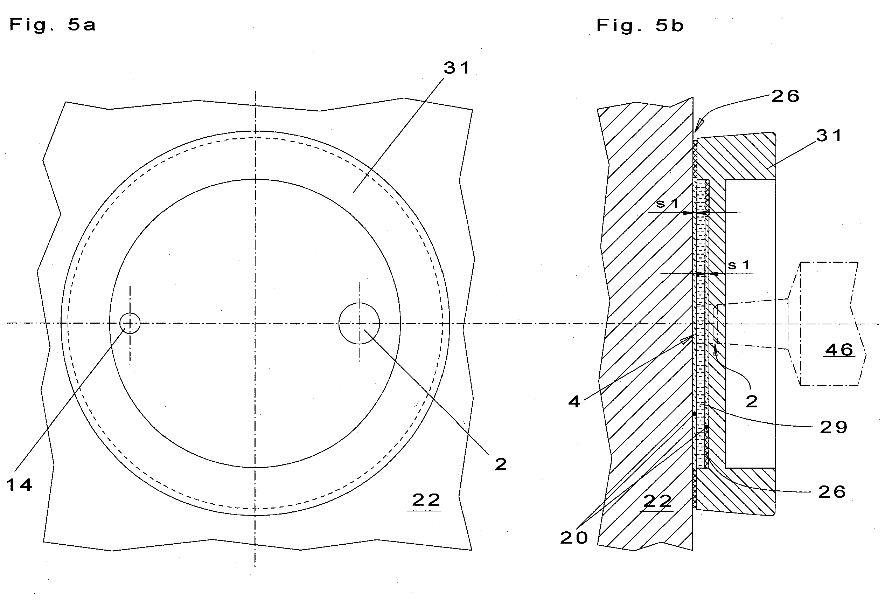

In einer weiteren Ausgestaltung eines Montagesystems, welches nicht dem vorliegend beanspruchten Aspekt der Erfindung unterfällt, wird ein faseriger Feuchtigkeitsspender 29 in die Klebeverbindung mit hineingebracht. Ein flüssigkeits- und gasdurchlässiges Element 6 ist hier nicht erforderlich. In den Figuren 5a und 5b ist ein Adapterkonus 31 mit einem Hohlraum 4 versehen, in dem schon vor dem Einspritzen des Klebers 20 der faserige Feuchtigkeitsspender 29 positioniert ist und beispielsweise mit einem weiteren Fixierungsring 26 gehalten wird. Vorteilhafterweise hat der Adapterkonus 31 auch je eine Einfüll- und Steigöffnung 2, 14. Eine Tube 46 mit dem Kleber 20 wird dazu in die Einfüllöffnung 2 eingesteckt. Damit eine besonders schnelle Klebeverbindung zustande kommt, ist es vorteilhaft, wenn der faserige Feuchtigkeitsspender 29 kurz vor dem Klebevorgang zusätzlich noch mit Wasser benetzt wird, obwohl der faserige Feuchtigkeitsspender 29 von Natur aus eine Grundfeuchte haben könnte.

Vorteilhaft haben sich faserige Feuchtigkeitsspender 29 erwiesen, die aus Hanf, Flachs oder Zellulose bestehen. Ferner ist es vorteilhaft, wenn diese Fasern zu Fäden verdrillt sind und ein grobmaschiges Netz oder Gelege (d.h.: kreuzweise angeordnet, aber nicht gewebt) bilden. Weiterhin ist es vorteilhaft, wenn der Kleber aerob ausgebildet ist.

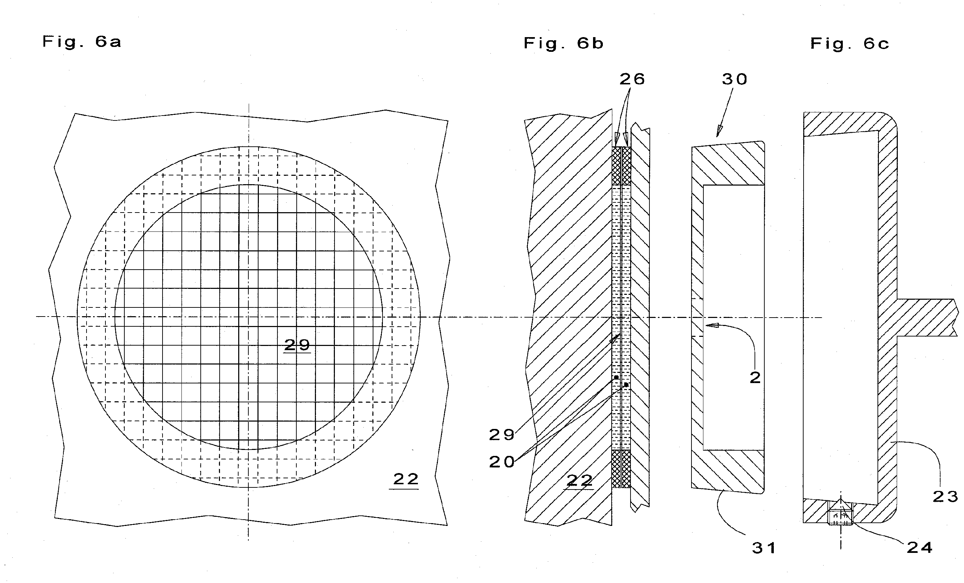

In einer weiteren Ausgestaltung des Montagesystems gemäß der Figuren 6a bis 6c ist der faserige Feuchtigkeitsspender 29 zwischen 2 Fixierungsringen 26 angeordnet. Nach Abzug eines nicht dargestellten Klebeschutzes vom linken Fixierungsring 26, kann dieses Montagesystem auf eine Wand 22 geklebt werden. Nach Abzug des Klebeschutzes vom rechten Fixierungsring 26 kann entweder direkt ein Gegenstand oder alternativ ein Adapter - oder wie hier gezeigt - ein Adapterkonus 31 (ein Adapterkonus ist ohne einen Hohlraum 4 bzw. ohne eigenen Fixierungsring 26) auf den rechten Fixierungsring 26 geklebt werden. Der Kleber kann entweder vor dem Andrücken des Gegenstandes gegen den rechten Fixierungsring direkt auf das Gewebe oder Gelege des faserigen Feuchtigkeitsspenders 29 aufgebracht werden, oder der Kleber wird durch eine Einfüllöffnung des Gegenstandes (nicht gezeigt) oder eines Adapters oder eines Adapterkonus 31 eingespritzt. Ein einfacher Adapter kann als Platte mit Gewindelöchern oder Gewindestift oder Haken ausgebildet sein. In schon beschriebener Weise kann auch hier wieder eine Adapterglocke 23 zusammen mit dem Adapterkonus zum Einsatz kommen.

Es versteht sich, dass die vorstehend genannten Merkmale der Erfindung nicht nur in der jeweils angegebenen Kombination, sondern auch innerhalb des Umfangs der beigefügten Ansprüche in anderen Kombinationen oder in Alleinstellung verwendbar sind, ohne den Rahmen der Erfindung zu verlassen.

### Bezugszeichenliste

- 1: Grundkörper
- 2: Einfüllöffnung
- 4: Hohlraum
- 6: flüssigkeits- und gasdurchlässiges Element
- 14: Steigöffnung
- 20: Kleber
- 22: Wand
- 23: Adapterglocke
- 24: Madenschraube
- 25: Niete
- 26: Fixierungsring
- 27: Gewindebohrung
- 28: Schraube
- 29: faseriger Feuchtigkeitsspender
- 30: Montageadapter
- 31: Adapterkonus
- 32: Gummiring (groß)
- 33: Gummiring (klein)
- 34a: untere Druckplatte
- 34b: obere Druckplatte (transparent)
- 35: U-Rohr-Manometer
- 36: Ventil
- 37a: Zylinder (transparent)
- 37b: Kolben
- 37c: Filzdichtung
- 37d: Druckraum mit Luftdruck P1
- 38: Volumen-Skala (an der Vorderfront des Zylinders)
- 39: Gewicht (austauschbar)
- 40: Sperrwasser
- 41: Schlauch
- 42: Halterung für Elemente 6
- 43: Hauptkurve
- 44: unteres Toleranzband
- 45: oberes Toleranzband
- 46: Tube/Kleber-Spender

- s1: Dicke des Klebers 20
- s2: Dicke des Elementes 6
- P1: Überdruck
- P2: atmosphärischer Druck
- d: Durchmesser der Durchströmungsfläche
- WS: Wassersäule
- t: Zeit in Sekunden

## Patentansprüche

1. Montagesystem zum Anbringen eines Gegenstands, wie einem Handtuchhalter, einem Zahnputzbecherhalter, einer Ablage, einem Regal und einer Leuchte an eine Wand (22) mit Fliesen, Naturstein oder auch anderen glatten oder hochwertigen Oberflächen, wie beispielsweise in Bädern,
aufweisend einen Fixierungsring (26) sowie ein flüssigkeits- und gasdurchlässiges Element (6), wobei das flüssigkeits- und gasdurchlässige Element (6) flüssigkeits- und/oder gasdurchlässig ausgebildet ist,
wobei der Fixierungsring (26) sowie das flüssigkeits- und gasdurchlässige Element (6) derart ausgebildet und eingerichtet sind, dass
- mittels des Fixierungsringes (26) das flüssigkeits- und gasdurchlässige Element (6) auf der Wand (22) fixierbar ist;
- durch einen geringen Abstand des flüssigkeits- und gasdurchlässigen Elementes (6) zur Wand (22) ein Hohlraum (4) zwischen der Wand (22), dem Fixierungsring (26) und dem flüssigkeits- und gasdurchlässigen Element (6) entsteht;
- wobei ein Kleber (20) in den Hohlraum (4) eingespritzt werden kann;
- nach einem zumindest teilweisen Aushärten von in dem Hohlraum (4) eingespritzten Kleber (20) der Gegenstand direkt oder mittelbar mit dem flüssigkeits- und/oder gasdurchlässigen Element (6) verbunden werden kann;
**dadurch gekennzeichnet, dass**
- das spezifische Gewicht des flüssigkeits- und gasdurchlässigen Elementes (6) um den Faktor 0,6 bis 0,7 geringer ist, als das spezifische Gewicht des Werkstoffes des flüssigkeits- und gasdurchlässigen Elementes (6).

2. Montagesystem nach Anspruch 1, **dadurch gekennzeichnet, dass** das spezifische Gewicht des flüssigkeits- und gasdurchlässigen Elementes (6) um den Faktor 0,64 bis 0,68 geringer ist, als das spezifische Gewicht des Werkstoffes des flüssigkeits- und gasdurchlässigen Elementes (6).

3. Montagesystem nach Anspruch 1 oder 2, **dadurch gekennzeichnet, dass** das flüssigkeits- und gasdurchlässige Element (6) im Wesentlichen aus Kunststoff besteht.

4. Montagesystem nach Anspruch 1 oder 2, **dadurch gekennzeichnet, dass** das flüssigkeits- und gasdurchlässige Element (6) im Wesentlichen aus Metall besteht.

5. Montagesystem nach Anspruch 4, **dadurch gekennzeichnet, dass** das flüssigkeits- und gasdurchlässige Element (6) aus offenporigem Metallschaum oder einer Sinterbronze besteht.

6. Montagesystem nach einem der vorangehenden Ansprüche,
**dadurch gekennzeichnet, dass**
das flüssigkeits- und gasdurchlässige Element (6) bei einer Durchströmung mit Umgebungsluft in Richtung der Dicke (s2), bei einer Durchströmungsfläche von 1 cm² (Durchmesser d), bei einem Volumenstrom von 1 Liter und bezogen auf 1 mm Dicke (s2), sich eine Druckdifferenz (delta-P) in Millimeter Wassersäule (mm WS) und eine Fallzeit (t) des Kolbens (37b) in Sekunden (s) gemäß der Kurve (43) der Figur 4 ergeben.

7. Montagesystem nach Anspruch 6, **dadurch gekennzeichnet, dass** die Durchströmung innerhalb der Toleranzbänder (44, 45) gemäß der Figur 4 erfolgt.

8. Montagesystem nach einem der vorangehenden Ansprüche,
**dadurch gekennzeichnet, dass**
- die Dicke (s1) der Kleberschicht 0,3 bis 1,0 mm - vorzugsweise 0,5 bis 0,8 mm - beträgt.

9. Montagesystem nach einem der vorangehenden Ansprüche,
**dadurch gekennzeichnet, dass**
- die Dicke (s2) des Elementes (6) 1,5 bis 6 mmvorzugsweise 2 bis 3,5 mm - beträgt.

10. Montagesystem nach Anspruch 8 oder 9, **dadurch gekennzeichnet, dass** die Dicken (s1) zu (s2) sich wie 1 zu 8 bis 1 zu 5 - vorzugsweise 1 zu 4 - verhalten.

11. Montagesystem nach einem der vorangehenden Ansprüche, **dadurch gekennzeichnet, dass** der Gegenstand über einen Adapterkonus (31) mit der Wand (22) oder über eine Gewindeverbindung mit dem flüssigkeits- und gasdurchlässigen Element (6) verbunden ist.

12. Montagesystem nach einem der vorangehenden Ansprüche, **dadurch gekennzeichnet, dass** der Kleber (20) aerob ausgebildet ist.

## Claims

1. Mounting system for attaching an object such as a towel holder, a toothbrush tumbler holder, a tray, a shelf and a lamp to a wall (22) with tiles, natural stone or other smooth or high-quality surfaces, for example in bathrooms,
comprising a fixation ring (26) and a liquid- and gas-permeable element (6), wherein the liquid- and gas-permeable element (6) is designed to be liquid- and/or gas-permeable,
wherein the fixation ring (26) and the liquid- and gas-permeable element (6) is designed and arranged in a way that
- the liquid- and gas-permeable element (6) can be fixed on the wall (22) by means of the fixation ring (26) ;
- a cavity (4) is formed between the wall (22), the fixation ring (26) and the liquid- and gas-permeable element (6) by a small distance between the liquid- and gas-permeable element (6) and the wall (22);
- wherein an adhesive (20) can be injected into the cavity (4);
- after at least partial curing of adhesive (20) injected into the cavity (4), the article can be attached to the liquid- and/or gas-permeable element (6) directly or indirectly;
**characterised in that**
- the specific weight of the liquid- and gas-permeable element (6) is lower by a factor of 0.6 to 0.7 than the specific weight of the material of the liquid- and gas-permeable element (6).

2. Mounting system according to claim 1, **characterized in that** the specific weight of the liquid- and gas-permeable element (6) is lower by a factor of 0.64 to 0.68 than the specific weight of the material of the liquid- and gas-permeable element (6).

3. Mounting system according to claim 1 or 2, **characterised in that** the liquid- and gas-permeable element (6) consists essentially of plastic.

4. Mounting system according to claim 1 or 2, **characterised in that** the liquid- and gas-permeable element (6) consists essentially of metal.

5. Mounting system according to claim 4, **characterised in that** the liquid- and gas-permeable element (6) consists of open-pored metal foam or a sintered bronze.

6. Mounting system according to one of the preceding claims, **characterized in that**
the liquid- and gas-permeable element (6), when flowed through with ambient air in the direction of the element's thickness (s2), with a flow area of 1 cm² (diameter d), at a volume flow of 1 litre and related to 1 mm thickness (s2), results in a pressure difference (delta-P) in millimetres water column (mm WS) and a fall time (t) of the piston (37b) in seconds (s) in accordance with the curve (43) of figure 4.

7. Mounting system according to claim 6, **characterised in that** the flow takes place within the tolerance bands (44, 45) according to figure 4.

8. Mounting system according to any one of the preceding claims,
**characterized in that**
- the thickness (s1) of the adhesive layer is 0.3 to 1.0 mm, preferably 0.5 to 0.8 mm.

9. Mounting system according to any one of the preceding claims, **characterized in that** the thickness (s2) of the element (6) is 1.5 to 6 mm, preferably 2 to 3.5 mm.

10. Mounting system according to claim 8 or 9, **characterised in that** the thicknesses (s1) to (s2) behave as 1 to 8 to 1 to 5 - preferably 1 to 4.

11. Mounting system according to any one of the preceding claims, **characterized in that** the article is connected to the wall (22) via an adapter cone (31) or to the liquid- and gas-permeable element (6) via a threaded connection.

12. Mounting system according to any one of the preceding claims, **characterized in that** the adhesive (20) is designed aerobically.

## Revendications

1. Système de montage pour fixer un objet, tel qu'un porte-serviette, un porte-gobelet pour brosse à dents, une tablette, une étagère et une lampe à une paroi (22) avec des carreaux, de la pierre naturelle ou d'autres surfaces lisses ou de haute qualité, tel que par exemple dans des salles de bains, comportant un anneau de fixation (26) ainsi qu'un élément perméable aux liquides et aux gaz (6), l'élément perméable aux liquides et aux gaz (6) étant conçu perméable aux liquides et/ou aux gaz, l'anneau de fixation (26) ainsi que l'élément perméable aux liquides et aux gaz (6) étant conçus et agencés de telle sorte que
- l'élément perméable aux liquides et aux gaz (6) peut être fixé sur la paroi (22) au moyen de l'anneau de fixation (26) ;
- par une faible distance de l'élément perméable aux liquides et aux gaz (6) jusqu'à la paroi (22), une cavité (4) est créée entre la paroi (22), l'anneau de fixation (26) et l'élément perméable aux liquides et aux gaz (6) ;
- un adhésif (20) pouvant être injecté dans la cavité (4) ;
- après un durcissement au moins partiel de l'adhésif (20) injecté dans la cavité (4), l'objet peut être relié directement ou indirectement à l'élément perméable aux liquides et/ou aux gaz (6) ;
**caractérisé en ce que**
- le poids spécifique de l'élément perméable aux liquides et aux gaz (6) est inférieur d'un facteur de 0,6 à 0,7 au poids spécifique du matériau de l'élément perméable aux liquides et aux gaz (6) .

2. Système de montage selon la revendication 1, **caractérisé en ce que** le poids spécifique de l'élément perméable aux liquides et aux gaz (6) est inférieur d'un facteur de 0,64 à 0,68 au poids spécifique du matériau de l'élément perméable aux liquides et aux gaz (6).

3. Système de montage selon la revendication 1 ou 2, **caractérisé en ce que** l'élément perméable aux liquides et aux gaz (6) est essentiellement constitué de matière plastique.

4. Système de montage selon la revendication 1 ou 2, **caractérisé en ce que** l'élément perméable aux liquides et aux gaz (6) est essentiellement constitué de métal.

5. Système de montage selon la revendication 4, **caractérisé en ce que** l'élément perméable aux liquides et aux gaz (6) est constitué de bronze fritté ou de mousse métallique à pores ouverts.

6. Système de montage selon une des revendications précédentes,
**caractérisé en ce que**
l'élément perméable aux liquides et aux gaz (6) produit, lors de la traversée de celui-ci par de l'air ambiant dans le sens de l'épaisseur (s2), avec une surface de traversée de 1 cm² (diamètre d), avec un débit volumique de 1 litre et rapporté à une épaisseur de 1 mm (s2), une différence de pression (delta-P) en millimètres de colonne d'eau (mm WS) et une durée de chute (t) du piston (37b) en secondes (s) selon la courbe (43) de la Fig. 4.

7. Système de montage selon la revendication 6, **caractérisé en ce que** l'écoulement s'effectue à l'intérieur des bandes de tolérance (44, 45) selon la figure 4.

8. Système de montage selon une des revendications précédentes,
**caractérisé en ce que**
- l'épaisseur (s1) de la couche d'adhésif est de 0,3 à 1,0 mm - de préférence de 0,5 à 0,8 mm.

9. Système de montage selon une des revendications précédentes,
**caractérisé en ce que**
- l'épaisseur (s2) de l'élément (6) est de 1,5 à 6 mm - de préférence de 2 à 3,5 mm.

10. Système de montage selon la revendication 8 ou 9, **caractérisé en ce que** les épaisseurs (s1) à (s2) sont dans un rapport de 1 à 8 à 1 à 5 - de préférence de 1 à 4.

11. Système de montage selon l'une des revendications précédentes, **caractérisé en ce que** l'objet est relié à la paroi (22) via un cône adaptateur (31) ou à l'élément perméable aux liquides et aux gaz (6) via un raccord fileté.

12. Système de montage selon une des revendications précédentes, **caractérisé en ce que** l'adhésif (20) est conçu aérobie.
